# EUROPÄISCHE PATENTANMELDUNG

(11) **EP 0 956 988 A2**
(43) Veröffentlichungstag der Anmeldung: **17.11.1999**
(21) Anmeldenummer: 99108931.9
(22) Anmeldetag: 05.05.1999
(51) Int. Cl.: B60J 7/05

(54) **Führungskulisse für Schiebedeckel an Schiebehebedachkonstruktionen für Kraftfahrzeuge**

(30) Priorität: 11.05.1998 DE 19820699
(71) Anmelder: Meritor Automotive GmbH, 60314 Frankfurt (DE)
(72) Erfinder: Stallfort, Klaus, Dipl.-Ing., 63477 Maintal (DE)
(74) Vertreter: Oppermann, Ewald, Dipl.-Ing.

(57) **Zusammenfassung**

Eine Führungskulisse (5) für eine Schiebehebedachkonstruktion für Kraftfahrzeuge besitzt einen Führungsschlitzbereich (12), dessen Schlitzweite durch eine federelastische oder federelastisch abgestützte Schlitzwand (21) verengt ist, so daß der in diesen Schlitzbereich einfahrende Führungsstift (10) nach Art einer Reibungsbremse einer bewegungshemmenden erhöhten Reibung ausgesetzt ist.

## Beschreibung

Die Erfindung bezieht sich auf eine Führungskulisse für die Verlagerung des Schiebedeckeis relativ zu einem Dachausschnitt einer Schiebehebedachkonstruktion für Kraftfahrzeuge, entsprechend dem Oberbegriff des Patentanspruchs 1.

Derartige Führungskulissen sind in verschiedenen Ausführungsformen und mit in ihren Endbereichen unterschiedlich geformten Führungsschlitzen bekannt (Z.B. DE-AS 16 05 960, DE 35 29 118 C1, DE 44 05 742 C1). Bekannt ist es auch, den mit seiner Hinterkante in die Verschiebestellung abgesenkten Schiebedeckel bei Schließverschiebebewegungen durch Niederhalter daran zu hindern, mit seiner Hinterkante unter Einwirkung der Antriebselemente Aufwärtsverlagerungen zu erfahren, solange sich der Schiebedekkel noch unter der hinteren festen Dachfläche befindet. Diese Niederhalter befinden sich zu diesem Zweck zwischen dem Boden der Führungsschiene und einem dazu senkrecht beabstandeten Flansch der Führungsschiene, dem der Niederhalter bei Schließverschiebebewegungen gleitend von unten anliegt. Der Niederhalter ist bei derartigen Konstruktionen fest mit dem Schiebedeckel oder einem deckelfesten Teil verbunden. Er kann direkt am freien hinteren Ende der Führungskulisse befestigt sein (DE 35 29 118 C1).

Bei Führungskulissen, deren hintere Führungsschlitzbereiche einen steil nach oben gerichteten Verlauf aufweisen, typischerweise etwa nach Art eines nach oben konkaven Viertelkreisbogens, kommt es beim Einfahren des Führungsstifts in diesen hinteren Führungsschlitzbereich zu einer schnellen Absenkbewegung der beiderseitigen Führungskulissen und des damit fest verbundenen Schiebedeckeis unter der Gewichtseinwirkung dieser Teile. Diese schnelle, schlagartige Absenkbewegung ist beendet, wenn an der Bewegung teilnehmende deckelseitige Teile auf dazu relativ stationäre Teile der Schiebehebedachkonstruktion auftreffen, beispielsweise wenn der Niederhalter auf den Boden der Führungsschiene aufschlägt. Hierbei entsteht ein sehr störendes Schlaggeräusch, das die Fahrzeugbenutzer irritieren kann und an eine Fehlfunktion oder Dejustierung der Schiebehebedachkonstruktion denken läßt. Auch Abpolsterungen der Niederhalter brachten keine wirksame Abhilfe.

Der Erfindung liegt die Aufgabe zugrunde, diese Schlaggeräusche zu verhindern, mindestens aber so wirksam zu reduzieren, daß sie nicht mehr als störend empfunden werden.

Die gestellte Aufgabe wird ausgehend von den im Oberbegriff des Patentanspruchs 1 angegebenen Merkmalen erfindungsgemäß durch die im Kennzeichnungsteil des Patentanspruchs 1 aufgeführten Maßnahmen gelöst. Vorteilhafte oder zweckmäßige Weiterbildungen der Erfindung gehen aus den Unteransprüchen hervor und sind nachfolgend ebenfalls erläutert.

Nach dem Grundgedanken der Erfindung ist der hintere Führungsschlitzbereich wenigstens partiell federelastisch auf eine Schlitzweite kleiner als der Durchmesser des Führungsstifts verengt, so daß bei der Absenkbewegung der Deckelhinterkante der in den hinteren Führungsschlitzbereich einfahrende Führungsstift zusammen mit den Schlitzwänden an der Verengungsstelle eine sehr wirksame Reibungsbremse bildet. Auf diese Weise wird eine Reibungskraft erzeugt, die der abwärts gerichteten, vom Gewicht der an der Absenkbewegung teilnehmenden Elemente abhängigen Kraft als Gegenkraft entgegengerichtet ist. Bei entsprechender Abstimmung dieser Reibungsbremse, die auf beiden Deckelseiten vorhanden ist, auf die durch das Gewicht induzierten Kräfte kann eine sanfte Abwärtsbewegung der Deckelhinterkante praktisch ohne wahrnehmbaren Aufsetzstoß erzielt werden, wenn beispielsweise der Niederhalter auf den Boden der Führungsschiene aufsetzt. Zur Erzielung der Verengung im hinteren Führungsschlitzbereich ist entweder die Schlitzwand selbst federelastisch ausgebildet oder rückseitig federelastisch abgestützt.

Vorzugsweise wird die federelastische Verengung des in Rede stehenden hinteren Führungsschlitzbereichs auf die im Patentanspruch 2 angegebene Weise herbeigeführt. Die hierbei vorgesehene Aussparung im Kulissenkörper und die dünne flexible Schlitzwand können zweckmäßig schon bei der Herstellung des Kulissenkörpers, bei aus Kunststoffmaterial geformtem Kulissenkörper schon beim Formungsvorgang, bei dem auch der Führungsschlitz erzeugt wird, gebildet werden. Die Aussparung und das Federelement sind so aufeinander abgestimmt und dimensioniert, daß die Rückseite der dünnen flexiblen Schlitzwand von dem eingesetzten Federelement flächig und über den gewünschten Schlitzverengungsbereich druckbeaufschlagt wird.

Wird das Federelement wie im Patentanspruch 3 angegeben aus einem gummielastischen Material geformt, so resultiert ein besonders einfacher und wirksamer Aufbau der führungsschlitzverengenden Mittel. In diesem Fall wird das Federelement gegenüber der Aussparung mit geeignetem Übermaß hergestellt, so daß sich die gewünschte Vorspannung beim formschlüssigen Einsetzen des dabei zusammengedrückten Federelements in die Aussparung ergibt. Um das Zusammendrücken des aus gummielastischem Material hergestellten Federelements zu ermöglichen oder zu erleichtern, kann es mit inneren Hohlräumen, Lochungen od.dgl. ausgestattet sein. Das Federelement stützt sich allseits an den Aussparungswandungen ab, wobei die dünne flexible Schlitzwand die gewünschte schlitzverengende Druckbeaufschlagung erfährt.

In einer weiteren Ausführungsform der Erfindung, wie sie aus dem Patentanspruch 4 hervorgeht, ist das Federelement als Biegefeder ausgebildet, die unter Vorspannung in die Aussparung eingesetzt ist. Die Biegefeder, beispielsweise aus Federstahl hergestellt, kann auf verschiedene Weise geformt sein, wenn sie sich nur einerseits flächig und etwa über dein gewünschten Schlitzverengungsbereich an die Rückseite der dünnen flexiblen Schlitzwand anlegt und sich andererseits an der der Schlitzwand abgelegenen Aussparungswandung abstützt. Die Aussparung kann eine auf die Formgebung des Federelements abgestimmte zweckmäßige Ausformung erhalten.

Für die federelastische Verengung des hinteren Führungsschlitzbereichs reicht es aus, wenn nur auf einer Seite des Führungsschlitzes eine die dünne flexible Schlitzwand definierende Aussparung im Kulissenkorper vorgesehen ist, während die gegenüberliegende Schlitzwand unelastischer Bestandteil des Kulissenkörpers ist. Jedoch kann die Anordnung auch so getroffen sein, daß sich auf beiden Seiten des Führungsschlitzes in seinem hinteren Führungsschlitzbereich eine Aussparung befindet, die gemäß dein Patentanspruch 5 über das Ende des Führungsschlitzes herumgeführt sein kann. Hierbei sind beide gegenüberliegende Schlitzwände in dem betreffenden Abschnitt des hinteren Führungsschlitzbereichs dünn und flexibel und durch die jeweils auf ihren Rückseiten wirksamen Federelemente oder Federelementabschnitte im Sinne einer Führungsschlitzverengung aufeinander zu beaufschlagt. Die zu beiden Seiten des hinteren Führungsschlitzbereichs vorgesehenen Aussparungen bzw. Aussparungsabschnitte und Federelemente bzw. Federelementabschnitte können die gleiche oder unterschiedliche Länge haben.

In weiterer Ausbildung der Erfindung können die Aussparung bzw. Aussparungen und das Federelement bzw. die Federelemente entsprechend Patentanspruch 6 beidseitig durch eine Stützplatte abgedeckt sein, so daß die Federelemente nicht aus den Aussparungen austreten können, sondern sich auch an den Innenflächen der Stützplatten abstützen. Ein derartiger Verbundaufbau einer Führungskulisse ist an sich bereits bekannt (DE 44 05 742 C1).

Weitere Einzelheiten der Erfindung werden nachfolgend anhand der bevorzugte Ausführungsbeispiele darstellenden Zeichnungen näher erläutert. Darin zeigt:
- Fig. 1: einen Längsschnitt durch eine Schiebehebedachkonstruktion bei geschlossenem Schiebedeckel,
- Fig. 2: den Längsschnitt gemäß Fig. 1, jedoch mit bezüglich seiner Hinterkante aus der Schließstellung abgesenktem Schiebedeckel vor oder zu Beginn seiner Öffnungsverschiebung unter die hintere feste Dachfläche,
- Fig. 3: eine abgebrochene und teilweise aufgebrochene Seitenansicht einer Führungskulisse in ihrem hier interessierenden hinteren Bereich und in ihrer in Fig. 2 dargestellten Relativlage zur benachbarten Führungsschiene,
- Fig. 4: den Schnitt durch die Führungskulisse gemäß der Linie IV-IV in Fig. 3,
- Fig. 5: eine der Fig. 3 ähnliche Seitenansicht der Führungskulisse mit einer anderen Ausführungsform des Federelements,
- Fig. 6: den Schnitt durch die Führungskulisse gemäß der Linie VI-VI in Fig. 5,
- Fig. 7: eine den Figuren 3 und 5 ähnliche Seitenansicht einer Führungskulisse mit einer weiteren Ausführungsform des Federelements,
- Fig. 8: eine den Figuren 3, 5 und 7 ähnliche Seitenansicht einer Führungskulisse mit einer gegenüber Fig. 3 modifizierten Ausführungsform des Federelements und
- Fig. 9: den Schnitt durch die Führungskulisse gemäß der Linie IX-IX in Fig. 8.

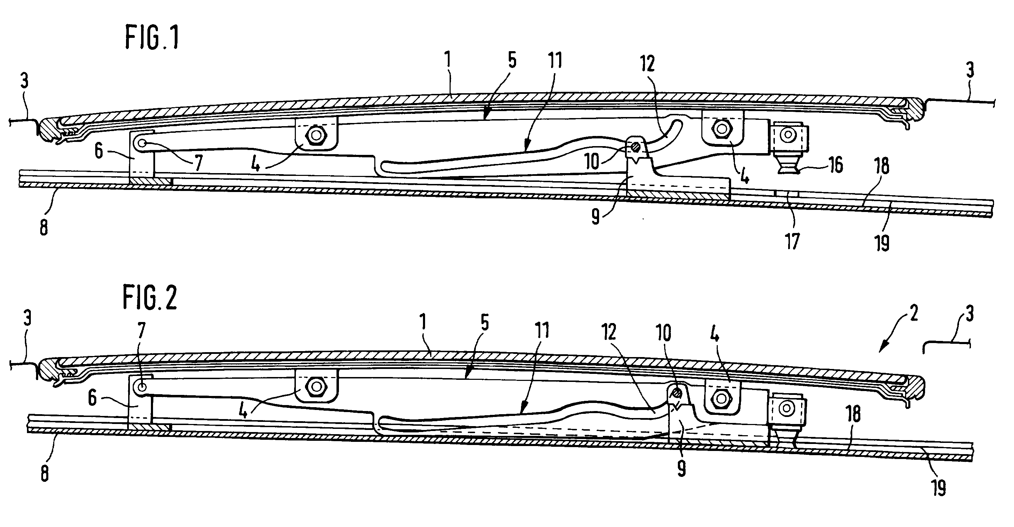

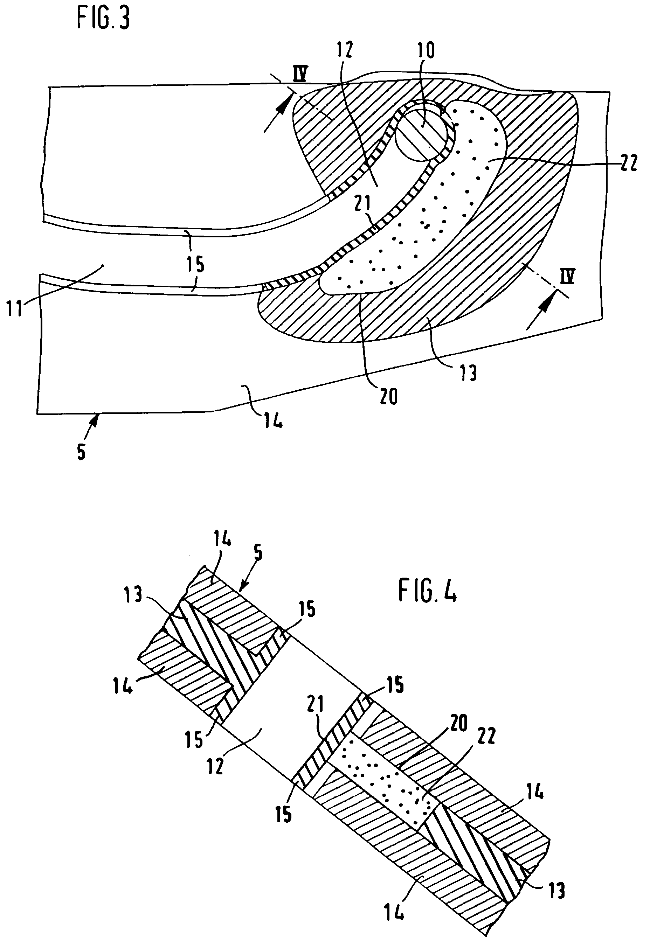

Die aus den Fig. 1 und 2 ersichtliche Schiebehebedachkonstruktion ist im gezeigten Beispiel mit einem Schiebedeckel 1 aus Glas ausgerüstet. Selbstverständlich kann der Schiebedeckel auch als Blechdeckel ausgebildet sein. Der Schiebedeckel 1 befindet sich in beiden Figuren innerhalb eines Dachausschnitts 2, der in dein Dachblech 3 eines Kraftfahrzeugs vorgesehen ist. In üblicher Weise kann der Schiebedeckel 1 aus der in Fig. 1 dargestellten Schließstellung mit seiner Hinterkante in die in Fig. 2 gezeigte Stellung bewegt und anschließend unter den hinteren Bereich des Dachblechs 3 verschoben werden.

An dem Schiebedeckel 1 sind an beiden Seiten (von denen nur eine dargestellt ist) jeweils zwei voneinander beabstandete Traglaschen 4 befestigt, an denen eine langgestreckte Führungskulisse 5 befestigt ist. Die Führungskulisse 5 steht über die vordere Traglasche 4 über und ist dort mit einem vorderen Gleitschuh 6 über einen Lagerzapfen 7 schwenkbar verbunden. Auf der der gezeichneten Seite gegenüberliegenden Seite des Dachausschnitts ist die Anordnung spiegelbildlich ausgeführt, wobei die beiden Lagerzapfen 7 auf einer gemeinsamen waagerechten und quer zur Schieberichtung verlaufenden Achse liegen. Zur Vereinfachung wird hier nur die aus den Fig. 1 und 2 ersichtliche Anordnung beschrieben, weil die gegenüberliegende Anordnung spiegelbildlich ausgeführt ist.

Der vordere Gleitschuh 6 ist verschiebbar an einer seitlich im Dachausschnitt befestigten Führungsschiene 8 geführt. Mit je nach Schwenkstellung des Schiebedeckels 1 unterschiedlichem Abstand zum vorderen Gleitschuh 6 ist ein hinterer Gleitschuh 9 ebenfalls verschiebbar an der Führungsschiene 8 geführt. An dem hinteren Gleitschuh 9 ist ein Führungsstift 10 befestigt, der in einen in der Führungskulisse 5 angebrachten Führungsschlitz 11 verschiebbar eingreift. Der Führungsschlitz 11 ist aus mehreren ineinander übergehenden unterschiedlich geformten Führungsschlitzbereichen zusammengesetzt. Die Führungsschlitzbereiche steuern nach Maßgabe der Relativstellung des Führungsstifts im Führungsschlitz und der Bewegung des Führungsstifts die unterschiedlichen Bewegungen des Schiebedeckeis. Wie ersichtlich ist, weist der hintere Führungsschlitzbereich 12 einen steil nach oben gerichteten Verlauf auf, welcher der Absenkbewegung der Hinterkante des Schiebedeckels 1 vor Beginn der Öffnungsverschiebebewegung des Schiebedeckels bzw. der Aufwärtsbewegung der Hinterkante des Schiebedeckels in dessen Schließstellung nach Beendigung der Schließverschiebebewegung des Schiebedeckels zugeordnet ist.

Für den Antrieb der Verlagerungsbewegungen des Schiebedeckels 1 greift an den hinteren Gleitschuh 9 ein seine Verschiebung an der Führungsschiene 8 bewirkendes Antriebselement, beispielsweise in Form eines druckfest und verschiebbar an der Führungsschiene 8 geführten Gewinde-Antriebskabels (nicht dargestellt), an. In den Figuren 1 und 2 sind nicht nur die Antriebselemente nicht dargestellt, sondern es fehlen im Interesse einer Darstellungsbeschränkung auf das im Rahmen der Erfindung Wesentliche auch weitere bei Schiebehebedachkonstruktionen übliche Bauelemente, beispielsweise der die Schiebehebedachkonstruktion tragende und mit dem Dachblech fest zu verbindende Schiebedachrahmen, die dem hinteren Randspalt zwischen Schiebedeckel und Dachblech zugeordnete Wasserauffangvorrichtung, die Verschiebungen des Schiebedeckels bei Schwenkbewegungen desselben verhindernde Sperrvorrichtung und der Fahrzeughimmel sowie ggf. der Deckelhimmel.

Die Führungskulisse 5 besitzt einen Kulissenkörper 13, der aus einer Metallplatte oder aus einem geeigneten abrieb- und druckfesten thermoplastischen Kunststoff geformt ist. In den Ausführungsbeispielen gemäß den Figuren 3 bis 9 ist ein Kulissenkörper 13 aus Kunststoff vorgesehen, dem beidseitig Stützplatten 14 flächig anliegen, die mit dem Kulissenkörper 13 zu einer sandwichartig aufgebauten Verbund-Führungskulisse 5 fest verbunden sind. Wie ersichtlich ist, befindet sich der Führungsschlitz 11 in dem Kulissenkörper 13 aus Kunststoff.

Die Stützplatten 14 weisen übereinstimmend einen dem Führungsschlitz 11 im Kulissenkörper 13 entsprechenden, aber mit größerer Schlitzweite ausgebildeten Schlitz auf, der in den Zeichnungen nicht näher dargestellt ist. Die Weite dieser Schlitze in den Stützplatten 14 ist so bemessen, daß den Führungsschlitz 11 des Kulissenkörpers 13 an beiden Seiten umgebende, nach außen aus dem Kulissenkörper 13 vorstehende Randvorsprünge 15, die mit dem Kulissenkörper 13 einteilig sind, formschlüssig aufgenommen sind. Die Innenflächen der Randvorsprünge 15 stimmen mit den Führungsbahnen des Führungsschlitzes 11 überein, wodurch die Führungsbahnen von den Randvorsprüngen 15 praktisch um die zweifache Materialdicke der Stützplatten 14 verbreitert sind. Die Stützplatten 14 verbessern nicht nur die Quersteifigkeit der Führungskulisse 5, sondern stützen durch ihre äußere Anlage an die Randvorsprünge 15 auch den Führungsschlitz 11 wirksam gegen von dem Führungsstift 10 eingeleitete Kräfte ab. Diese Kräfte tendieren dazu, den Führungsschlitz 11 aufzubiegen, d.h. die Schlitzweite zu vergrößern, wodurch ein unerwünscht großes Führungsspiel entstehen könnte.

Am hinteren Ende der Führungskulisse 5 ist ein nach unten vorstehender Niederhalter 16 befestigt. Bei geschlossenem Schiebedeckel 1 liegt dem Niederhalter 16 eine Durchtrittsöffnung 17 in den oberen profilflanschen der Führungsschiene 8 gegenüber. Wird der Schiebedeckel 1 durch Einfahren des Führungsstifts 10 in den hinteren Führungsschlitzbereich 12 mit seiner Hinterkante unter Verschwenken um den Lagerzapfen 7 in die Stellung gemäß Fig. 2 abgesenkt, so tritt der Niederhalter 16 durch die Durchtrittsöffnung 17 nach unten hindurch und trifft schließlich auf den Boden 18 der Führungsschiene 8 auf. Die nachfolgend noch näher zu beschreibenden Maßnahmen dienen dem Zweck, dieses Auftreffen ohne wahrnehmbares Aufschlaggeräusch zu bewerkstelligen. Wird dann der Schiebedeckel 1 ausgehend von seiner Stellung gemäß Fig. 2 nach hinten unter das Dachblech 3 verschoben (Öffnungsverschiebung), so greift der Niederhalter 16 unter die dem Boden 18 zugekehrte Flanschfläche 19 der Führungsschiene 8. Erfolgt eine Schließverschiebung in Gegenrichtung, sorgen der Niederhalter 16 und die Flanschfläche 19 dafür, daß der Schiebedeckel 1 veranlaßt durch den Eingriff zwischen Führungsstift 10 und Führungsschlitz 11 hinten nicht aufsteigen kann, bis wieder die Stellung gemäß Fig. 2 erreicht ist, in welcher der Niederhalter 16 durch die Durchtrittsöffnung 17 nach oben hindurchtreten kann, bis die Schließstellung gemäß Fig. 1 erreicht ist.

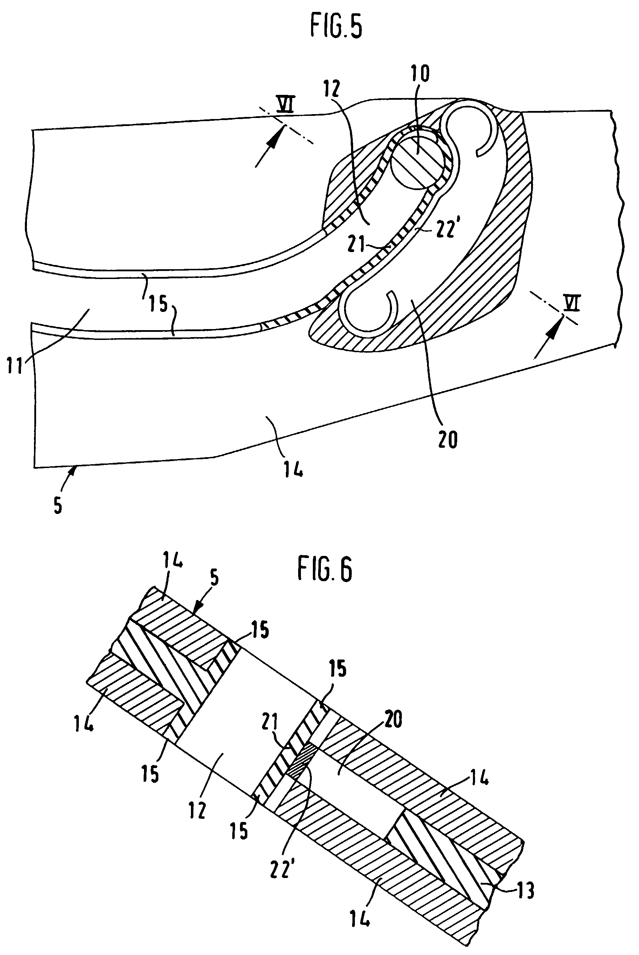

Nachfolgend wird nunmehr anhand der in den Figuren 3 bis 9 gezeigten Ausführungsformen beschrieben, daß der Führungsschlitz 11 in seinem hinteren Führungsschlitzbereich 12 über einen Teilabschnitt seines Verlaufs auf eine Schlitzweite verengt ist, die kleiner als der Durchmesser des Führungsstifts 10 ist. Weiterhin wird beschrieben, daß die Verengung durch mindestens eine federelastische oder federelastisch abgestützte Schlitzwand gebildet ist. Zunächst wird auf die Ausführungsform gemäß den Figuren 3 und 4 Bezug genommen.

Im Kulissenkörper 13 ist eine dem hinteren Führungsschlitzbereich 12 in seinem Verlauf etwa folgende Aussparung 20 gebildet. Diese Aussparung 20 ist von dem Führungsschlitz durch eine dünne flexible Schlitzwand 21 getrennt. Die Schlitzwand 21 hat etwa die Dicke der Randvorsprünge 15, die Bestandteile der Schlitzwand sind. In die Aussparung 20 ist ein der Rückseite der Schlitzwand 21 angedrücktes Federelement 22 eingesetzt, das bei dieser Ausführungsform aus einem gummielastischen Material geformt und beim Einsetzen in die Aussparung 20 vorgespannt ist. Auf diese Weise wird die dünne flexible Schlitzwand 21 schlitzeinwärts verlagert, wodurch die Schlitzweite im Bereich des hinteren Führungsschlitzbereichs 12 auf ein Maß verengt ist, das kleiner ist als der Durchmesser des Führungsstifts 10. Bei Absenkbewegungen der Deckelhinterkante aus der Stellung gemäß Fig. 1 in die Stellung gemäß Fig. 2, aber auch in umgekehrter Richtung, erfährt der Führungsstift 10 beim Durchfahren des hinteren Führungsschlitzbereichs 12 eine wirksame Reibungsbremsung. Diese schließt ein hartes Auftreffen des Niederhalters 16 auf den Boden 18 der Führungsschiene 8 aus.

Das Federelement 22 ist plattenförmig ausgebildet und kann aus einem Gummimaterial geeigneter Shore-Härte geformt sein. Um ein Zusammendrücken des Federelements beim Einsetzen in die Aussparung 20 zu ermöglichen oder zu erleichtern, können sich in dem Gummimaterial regelmäßige oder unregelmäßige Hohlräume befinden, beispielsweise Hohlkammern oder aber Schaumporen.

Wie aus den Figuren 3 und 4 ferner hervorgeht, sind die Aussparung 20 und das Federelement 22 beidseitig durch die dem Kulissenkörper 13 flächig anliegenden und damit zu einer Sandwichkonstruktion fest verbundenen Stützplatten 14 abgedeckt. Das Federelement 22 ist daher weder von außen sichtbar noch kann es aus der Aussparung 20 herausfallen.

Das aus den Figuren 5 und 6 ersichtliche Ausführungsbeispiel unterscheidet sich von demjenigen gemäß den Figuren 3 und 4 im wesentlichen dadurch, daß in die Aussparung 20 ein anderes Federelement 22' eingesetzt ist, das als bügelförmige Biegefeder ausgebildet ist. Die Biegefeder ist beim Einsetzen in die Aussparung 20 unter Vorspannung eingesetzt, so daß ihr mittlerer Bereich der Rückseite der Schlitzwand 21 angedrückt ist, wodurch es ebenfalls zu der bereits beschriebenen Verengung der Schlitzweite im hinteren Führungsschlitzbereich 12 kommt.

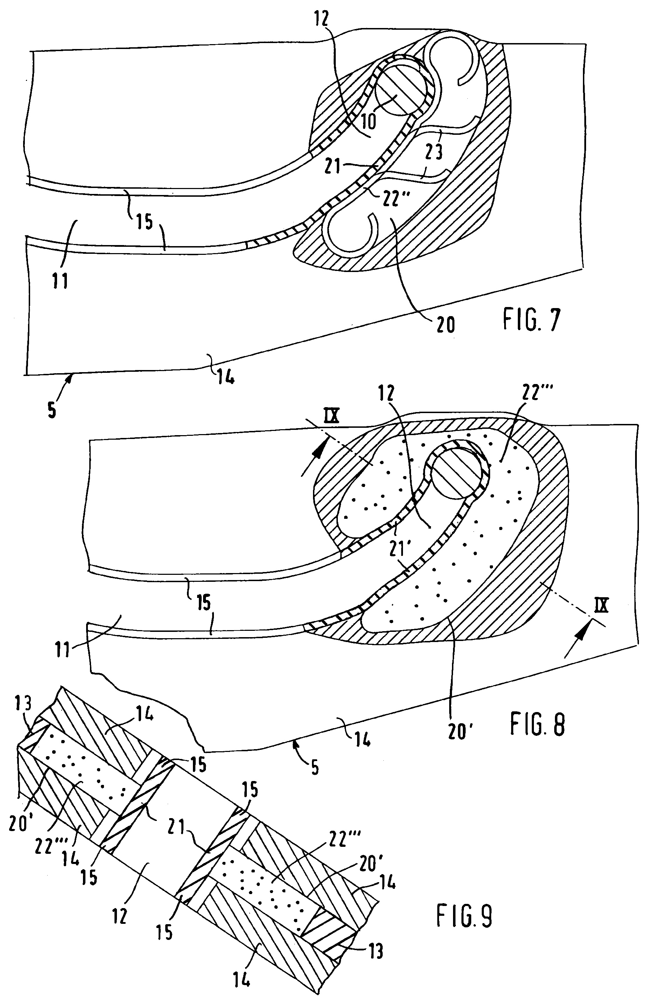

Die Biegefeder kann bei gleicher Wirksamkeit verschiedene Formgebungen erfahren. Ein weiteres Ausführungsbeispiel geht aus Fig. 7 hervor, bei welchem das Federelement 22'' etwa die Biegefederkonfiguration gemäß den Figuren 5 und 6 aufweist, jedoch sind aus der Biegefeder mehrere Stützfüße 23 abgebogen, welche sich auf der der Schlitzwand 21 gegenüberliegenden Wand der Aussparung 20 federnd abstützen.

Bei der Ausführungsform gemäß den Figuren 8 und 9 ist vorgesehen, daß die Aussparung 20' um das Ende des hinteren Führungsschlitzbereichs 12 herumgeführt ist und sich zu beiden Seiten des Führungsschlitzes erstreckt. Dementsprechend ist auch das Federelement 22''' um das Ende des hinteren Führungsschlitzbereichs 12 herumgeführt, und die dünne flexible Schlitzwand 21' begrenzt den hinteren Führungsschlitzbereich 12 von beiden Seiten und umfaßt auch das Ende des hinteren Führungsschlitzbereichs 12. In die Aussparung 20' ist im gezeichneten Beispiel ein auf die Gesamtabmessungen der Aussparung 20' abgestimmtes Federelement 22''' aus gummielastischem Material unter Vorspannung eingesetzt. Auf diese Weise wirkt auf die Schlitzwand 21' von beiden Führungsschlitzseiten her eine Federkraft ein, welche zu einer wirksamen Verengung der Schlitzweite im hinteren Führungsschlitzbereich 12 führt. Da auch das Ende des hinteren Führungsschlitzbereichs 12 von der dünnen Schlitzwand 21' begrenzt wird und mit gummielastischem Material hinterlegt ist, wirkt das Ende des hinteren Führungsschlitzbereichs 12 zugleich als Endlagendämpfer für den Führungsstift 10.

Vorstehend wurde eine Führungskulisse für eine Schiebehebedachkonstruktion für Kraftfahrzeuge beschrieben, die einen Führungsschlitzbereich besitzt, dessen Schlitzweite durch eine federelastische oder federelastisch abgestützte Schlitzwand verengt ist, so daß der in diesen Schlitzbereich einfahrende Führungsstift nach Art einer Reibungsbremse einer bewegungshemmenden erhöhten Reibung ausgesetzt ist.

## Patentansprüche

1. Führungskulisse zur Befestigung an jeweils einer Seitenkante eines Schiebedeckels (1) und für die Verlagerung des Schiebedeckels relativ zu einem entsprechenden Dachausschnitt (2) einer Schiebehebedachkonstruktion für Kraftfahrzeuge, deren Schiebedeckel (1) mit vorderen und hinteren Gleitschuhen (6, 9) an seitlich im Dachausschnitt (2) befestigten Führungsschienen (8) geführt, durch an die hinteren Gleitschuhe (9) angreifende Antriebselemente angetrieben und an seinen vorderen Gleitschuhen (6) um eine waagerechte, quer zur Schieberichtung verlaufende Achse schwenkbar gelagert ist, wobei die Antriebsübertragung für die Verlagerung des Schiebedeckels (1) durch an den hinteren Gleitschuhen (9) befestigte Führungsstifte (10) erfolgt, die dafür jeweils in einen aus mehreren ineinander übergehenden unterschiedlich geformten Führungsschlitzbereichen in einem Kulissenkörper (13) gebildeten Führungsschlitz (11) verschiebbar eingreifen, dessen Führungsschlitzbereiche nach Maßgabe der der Relativstellung des Führungsstifts (10) im Führungsschlitz (11) und der Bewegung des Führungsstifts die unterschiedlichen Bewegungen des Schiebedeckels (1) steuern, wobei der hintere Führungsschlitzbereich (12) einen steil nach oben gerichteten, der Absenkbewegung der Hinterkante des Schiebedeckels (1) vor Beginn der Öffnungsschiebebewegung des Schiebedeckeis zugeordneten Verlauf aufweist, **dadurch gekennzeichnet,** daß der Führungsschlitz (11) in seinem hinteren Führungsschlitzbereich (12) mindestens über einen Teilabschnitt seines Verlaufs auf eine Schlitzweite verengt ist, die kleiner als der Durchmesser des Führungsstifts (10) ist, und daß die Verengung durch mindestens eine federelastische oder federelastisch abgestützte Schlitzwand (21, 21') gebildet ist.

2. Führungskulisse nach Anspruch 1, **dadurch gekennzeichnet,** daß im Kulissenkörper (13) eine dem hinteren Führungsschlitzbereich (12) in seinem Verlauf etwa folgende Aussparung (20, 20') gebildet ist, die von dem Führungsschlitz durch eine dünne flexible Schlitzwand (21, 21') getrennt ist und in welche ein der Rückseite der Schlitzwand angedrücktes Federelement (22, 22', 22'', 22''') eingesetzt ist.

3. Führungskulisse nach Anspruch 2, **dadurch gekennzeichnet,** daß das Federelement (22, 22''') aus einem gummielastischen Material geformt und beim Einsetzen in die Aussparung (20, 20') vorgespannt ist.

4. Führungskulisse nach Anspruch 2, **dadurch gekennzeichnet,** daß das Federelement (22') als eine der Rückseite der Schlitzwand (21) anliegende, beim Einsetzen in die Aussparung (20) vorgespannte Biegefeder ausgebildet ist.

5. Führungskulisse nach einem der Ansprüche 2 bis 4**, dadurch gekennzeichnet,** daß die Aussparung (20') um das Ende des hinteren Führungsschlitzbereichs (12) herumgeführt ist und sich zu beiden Seiten des Führungsschlitzes erstreckt.

6. Führungskulisse nach einem der Ansprüche 2 bis 5, dadurch gekennzeichnet, daß die Aussparung (20, 20') und das Federelement (22, 22', 22'', 22''') beidseitig durch dem Kulissenkörper (13) anliegende und damit fest verbundene Stützplatten (14) abgedeckt ist.
